# EUROPEAN PATENT SPECIFICATION

(11) **EP 4 624 429 B1**
(45) Date of publication and mention of the grant of the patent: **21.10.2026**
(21) Application number: 25179883.1
(22) Date of filing: 02.08.2023
(51) Int. Cl.: C03B 3/02, C03B 5/235

(54) **HYDROGEN-FUELED SUBMERGED COMBUSTION MELTER AND GLASS MELTING SYSTEM INCLUDING THE SAME**
FOUR DE FUSION À COMBUSTION IMMERGÉE ALIMENTÉ EN HYDROGÈNE ET SYSTÈME DE FUSION DE VERRE LE COMPRENANT
WASSERSTOFFBETRIEBENER SCHMELZER MIT UNTERGETAUCHTER VERBRENNUNG UND GLASSCHMELZSYSTEM DAMIT

(30) Priority: 09.08.2022 US 202217883798
(43) Date of publication of application: 01.10.2025
(62) Document number(s) of the earlier application(s) in accordance with Art. 76 EPC: 23758499.0 / 4 519 223
(73) Proprietor: Owens-Brockway Glass Container Inc., Perrysburg, OH 43551 (US)
(72) Inventor: WEIL, Scott, Perrysburg, 43551 (US); SMITH, Roger, Perrysburg, 43551 (US); WANG, Zhongming, Perrysburg, 43551 (US)
(74) Representative: Blumbach · Zinngrebe Patentanwälte PartG mbB

(56) References cited:
- EP-B1- 3 138 820
- WO-A1-2014/008045
- US-A- 4 696 690
- US-A1- 2018 057 387

## Description

### Technical Field

This disclosure relates to a submerged combustion melter as well as a method for melting a batch feedstock material in a submerged combustion melter to produce glass.

### Background

A submerged combustion melter (SCM) includes one or more submerged burners that are located below the level of a glass melt contained within the melter. These burners are fed with a fuel, typically a hydrocarbon fuel such as natural gas or propane, and an oxidant such as air, commercially pure oxygen, or an oxygen-enriched gas. The fuel and oxidant are mixed prior to or within the submerged burner and, upon being fired into the glass melt, combust to release combustion products (which include any uncombusted fuel and oxidant) directly into the glass melt. The direct discharge of combustion products into the glass melt produces substantial turbulence in the glass melt, which enhances mixing of the batch feedstock materials fed to the melter and improves heat transfer within the melt, thus accelerating the rate at which the batch feedstock materials are melted and integrated into the melt compared to a conventional glass melting furnace.
EP 1 138 820 A1 describes a system for pre-heating feedstock to a melter using melter exhaust comprising a structure defining a melting chamber, at least one feedstock supply structure fluidly connected to the structure defining the melting chamber, one or more exhaust conduits fluidly connected to the structure defining the melting chamber, a heat exchange area through which the feedstock flows to the melting chamber, wherein at least some of the exhaust flows from the melting chamber through the heat exchange area.
US 2018/0057387 A1 describes continuous flow submerged combustion melter cooling wall panels, submerged combustion melters, and methods of using the same. A portion or all of warmed cooling water is routed through a conduit to preheat feedstock.
WO 2014/008045 A1 describes processes and systems for producing molten glasses from glass batches using turbulent submerged combustion melting. For a hot intermediate heat transfer fluid, it is possible to transfer heat to the oxidant or the fuel of submerged combustion burners either indirectly by transferring heat through the walls of a heat exchanger, or a portion of the hot intermediate fluid could exchange heat directly by mixing with the oxidant or the fuel.
US 4,696,690 describes a method and device for preheating raw materials for glass production, particularly a cullet mixture. As waste gas flows through a bunker, the cullet mixture is preheated. During this process, the waste gas is cooled down and emerges through a waste-gas supply line from the bunker and subsequently reaches a wet scrubber in which the waste gas, entering from below, is sprayed from above with a washing fluid for removing or condensing the impurities accumulating in the waste gas during the preheating of the cullet mixture.

Compared to a conventional glass melting furnace-one that relies on radiant heating from overhead burners to heat a relatively calm molten glass bath and melt a blanket of batch feedstock materials fed on top of the glass bath-the necessary residence time of the glass melt in a SCM is reduced due to the more efficient submerged combustion melting process. As such, a SCM can be designed to occupy a smaller footprint that than a conventional glass melting furnace and, due to its reduced size and glass melt capacity, the housing of the SCM can be fluid cooled. Because the housing of the SCM can be fluid cooled, the SCM is able to be repeatedly shut down and restarted since thermal shock and related damage to any refractory materials that may line the SCM housing can be avoided. While there are many benefits to melting glass in a SCM, there are also plenty of challenges. One particular challenge associated with glass melting in a SCM is that the combustion of a hydrocarbon fuel and an oxidant, and the direct discharge of the resultant combustion products into the glass melt, tends to generate NO_{X}, SO_{X}, and CO₂ that exits the SCM as part of a flue gas. These gases are generated during the combustion reaction itself and/or through reactions that proceed during intimate contact between the combustion products and the glass melt. The NO_{X}, SO_{X}, and CO₂ emissions included in the SCM flue gas, in turn, may need to be abated through an exhaust treatment process and/or the SCM may have to be operated in a less-than-desired way to reduce NOₓ, SO_{X}, and CO₂ emissions to acceptable levels.

### Summary of the Disclosure

The present disclosure embodies a number of aspects that can be implemented separately from or in combination with each other. According to one embodiment of the present disclosure, a method of making glass includes several steps. One step of the method involves discharging combustion products from each of one or more submerged combustion burners directly into a glass melt contained within a submerged combustion melter. The combustion products result from the combustion of hydrogen gas and an oxidant gas. Another step of the method involves exhausting a flue gas flow from the submerged combustion melter. Yet another step of the method involves delivering a preheater gas flow to a batch feedstock material preheater to heat batch feedstock material. The preheater gas flow comprises at least the flue gas flow exhausted from the melter, and the batch feedstock material comprises cullet. Another step of the method involves introducing the batch feedstock material into the submerged combustion melter after being heated in the batch feedstock material preheater. Still another step of the method involves removing a condenser gas flow from the batch feedstock material preheater. The condenser gas flow has a temperature lower than a temperature of the preheater gas flow delivered to the batch feedstock material preheater. Yet another step of the method involves condensing the condenser gas flow to form a water condensate. And still another step of the method involves cooling the submerged combustion melter with an inflow of cooling water that includes the water condensate obtained from condensing the condenser gas flow.

According to another embodiment of the present disclosure, a method of making glass includes several steps. One step of the method involves discharging combustion products directly into a glass melt contained within a submerged combustion melter. The combustion products agitate the glass melt and result from the combustion of a mixture of hydrogen gas and an oxidant gas. Another step of the method involves exhausting a flue gas that comprises water vapor from the submerged combustion melter. Still another step of the method involves heating a batch feedstock material with the flue gas. The batch feedstock material comprises at least 40 wt% cullet. Yet another step of the method involves introducing the batch feedstock material into the glass melt contained within the submerged combustion melter. Another step of the method involves condensing the flue gas after the flue gas is used to heat the batch feedstock material to form a water condensate that includes liquid water. And yet another step of the method involves supplying the liquid water to the submerged combustion melter to cool the melter.

According to yet another embodiment of the present disclosure, a glass-melting system is disclosed that includes a submerged combustion melter, a batch feedstock material preheater, a condenser, and a cooling water reservoir. The submerged combustion melter comprises a housing that includes an enclosed shell, which interiorly defines an internal cooling flow path, and further comprises at least one submerged combustion burner configured to introduce a mixture of hydrogen gas and an oxidant gas directly into the melter. Each of a batch inlet and an exhaust outlet is defined through the housing of the submerged combustion melter. The batch feedstock material preheater is in fluid communication with the submerged combustion melter and is configured to heat batch feedstock material with a preheater gas flow that includes flue gas exhausted from the submerged combustion melter through the exhaust outlet. The preheater gas flow exits the batch feedstock material preheater as a condenser gas flow. The condenser is in fluid communication with the batch feedstock material preheater and is configured to condense the condenser gas flow exiting the batch feedstock material preheater into a water condensate. The cooling water reservoir is in fluid communication with the condenser and the submerged combustion melter. The cooling water reservoir is configured to receive the water condensate from the condenser and to deliver an inflow of cooling water to the internal flow path of the enclosed shell of the submerged combustion melter.

### Brief Description of the Drawings

FIG. 1 is a schematic overview of a submerged combustion melter system according to one embodiment of the present disclosure; and
FIG. 2 is a cross-sectional view of a generalized submerged combustion melter according to one embodiment of the present disclosure in which two different options for an internal coolant flow path in the enclosed shell of the housing of the melter are shown in the same illustration for simplicity.

### Detailed Description

The present disclosure relates to a submerged combustion melter that includes one or more submerged combustion burners that combust a mixture of hydrogen gas and an oxidant gas. Here, hydrogen is fed to each of the one or more submerged combustion burners as the fuel rather than a typical hydrocarbon gas, and the oxidant gas includes at least 30 vol% O₂ or, more preferably, at least 90 vol% O₂ or even at least 99 vol% O₂. Ideally, the combustion of hydrogen and the oxidant gas in each of the submerged combustion burners releases water as the predominant emission. The amount of CO₂, NO_{X}, and SO_{X} released into the melter flue gas can also be minimized with greater efficacy as each of the volumetric percentage of O₂ in the oxidant gas and the cullet content of the batch feedstock material increases (along with using hydrogen gas as the fuel). This is because CO₂ is not a byproduct of H₂ combustion or the melting of cullet, the impurities that typically generate NO_{X} and SO_{X} emissions are generally not contained in hydrogen gas or cullet, and the amount of NO_{X} and SO_{X} emissions generated when combusting hydrogen gas and the oxidant gas generally decreases with an increasing O₂ concentration in the oxidant gas. Additionally, heat from the flue gas released from the melter, which includes water (H₂O_{(*v*)}) as the predominant gaseous emission (and possibly the only gaseous emission), can be recovered to heat all or a portion of the batch feedstock material fed to the melter, or the water vapor in the flue gas exiting the melter can be condensed and delivered to the melter for cooling, or both. In this way, the melter can be a self-source of (i) heat for pre-heating some or all of the batch feedstock material and/or (ii) cooling water for cooling the melter housing. The melter can be included in a glass melting system that takes advantage of these opportunities.

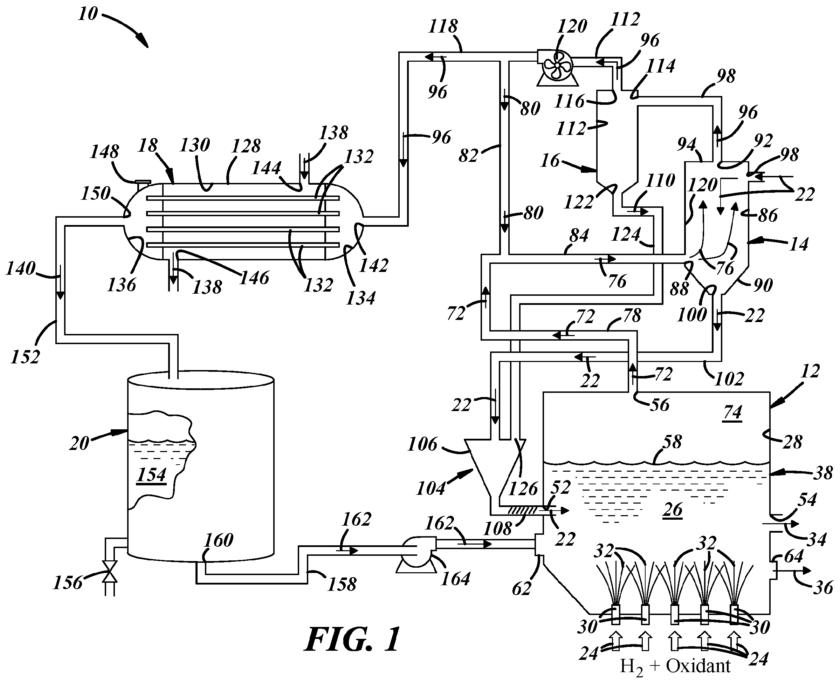

Referring now to FIG. 1, a schematic depiction of a glass melting system 10 that includes a submerged combustion melter 12 according to the present disclosure is shown. The glass melting system 10 may also include a batch feedstock material preheater 14, a particulate separator 16, a condenser 18, and a cooling water reservoir 20, although one or more of these operating units may be omitted or substituted with another operating unit of the same or different function. The batch feedstock material preheater 14 is in fluid communication with the melter 12, the condenser 18 is in fluid communication with the preheater 14, and the cooling water reservoir 20 is in fluid communication with the condenser 18 and the submerged combustion melter 12. In this way, water vapor emitted from the submerged combustion melter 12 as all or part of a flue gas may be returned to the melter 12 as cooling water after preheating batch feedstock material in the preheater 14 and then being condensed in the condenser 18. Additionally, the particulate separator 16, if present, is in fluid communication with the preheater 14 and the condenser 18 to collect entrained particulate matter, and may be further configured to deliver the captured particulate matter back to the submerged combustion melter 12. The glass melting system 10 includes piping and material delivery equipment, e.g., pumps and fans, to transfer the various substances into, through, and out of the system 10, as well as a control system configured to monitor and operate at least some aspects of the system 10 in accordance with programmed or operator-input instructions.

During operation of the glass melting system, a batch feedstock material 22 is introduced into the melter 12 after being heated in the batch feedstock material preheater 14. At the same time, a mixture 24 that comprises hydrogen gas as the fuel and an oxidant gas is introduced or fired directly into a glass melt 26 contained within an interior reaction chamber 28 of the melter 12 through each of one or more submerged combustion burners 30. The combustion reaction between the hydrogen and oxidant gases results in combustion products 32 being discharged directly into and through the glass melt 26 from each of the submerged combustion burners 30, which agitates the glass melt 26 and generates turbulent flow patterns within the melt 26. The agitation of the glass melt 26 quickly disperses the batch feedstock material 22 received therein and improves melting and reaction kinetics by mixing and heating the feedstock material 22 more rapidly compared to conventional glass melting practices. The batch feedstock material 22 eventually melts into molten glass and assimilates into the glass melt 26. An outflow of molten glass 34 is drawn from the interior reaction chamber 28 of the melter 12 and a flow of expended cooling water 36 exits the melter 12. The outflow of molten glass 34 that is pulled from the melter 12 is preferably delivered to downstream equipment before being formed into finished glass articles such as, for example, glass containers.

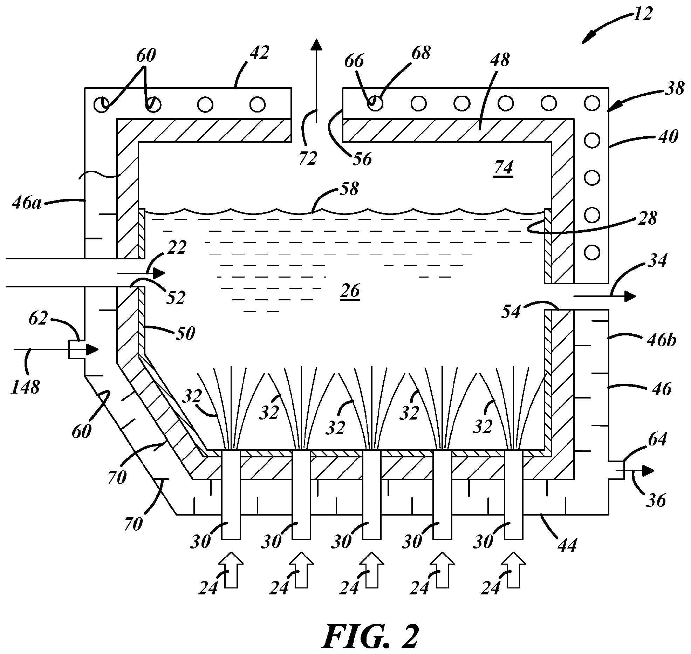

As shown in FIG. 1 and more specifically in FIG. 2, the submerged combustion melter includes a housing 38 that defines the interior reaction chamber 28 where the agitated glass melt 26 is contained. The housing 38 is fluid cooled and includes an enclosed shell 40. The enclosed shell 40 has a roof 42, a floor 44, and an upstanding wall 46 that connects roof 42 and the floor 44 and which further comprises an inlet end wall 46a, an outlet end wall 46b spaced apart from the inlet end wall 46a, and two opposed side walls between the inlet and outlet end walls 46a, 46b. The enclosed shell 40 is preferably formed of a metal such as one or more of cast iron, a stainless steel such as ASTM A47, ASTM A48, or ASTM A339, ductile or nodular iron, Ni-hard type 2, or Ni-resist type 2. The housing 38 may further include a refractory lining 48 supported on the inside of the enclosed shell 40 and a layer of frozen glass 50 formed on the inside of the refractory lining 48 or the shell 40. The layer of frozen glass 50 contacts the glass melt 26 and is formed in-situ when the glass melt 26 contacts the refractory lining 48, if present, or the shell 40, which is cooled by the cooling water, as described in more detail below. The refractory lining 48 may cover the entire inside of the enclosed shell 40, as shown, or only part of the inside of the enclosed shell 40 as would be needed to shield the enclosed shell 40 from exposure to the glass melt 26.

The housing 38 defines a batch inlet 52, a molten glass outlet 54, and an exhaust outlet 56, which may be defined through the inlet end wall 46a, the outlet end wall 46b, and the roof 42 of the enclosed shell 40, respectively, but those locations are not mandatory and can be located elsewhere in the housing 38, if desired. For instance, the batch inlet 52 may be defined in the housing 38 below a level 58 of the glass melt 26, as shown in FIGS. 1 and 2, or the batch inlet 52 may be defined in the housing 38 above the melt level 58 of the glass melt 26. The batch feedstock material 22 is introduced into the glass melt 26 through the batch inlet 52 and the outflow of molten glass 34 is drawn from the melter 12 through the molten glass outlet 54. Additionally, to enable fluid cooling, the enclosed shell 40 of the housing 38 interiorly defines an internal cooling flow path 60 that fluidly communicates with a cooling inlet 62 and a cooling outlet 64 to allow cooling water to circulate internally through the shell 40, thus cooling the shell 40 and the refractory lining 48 supported by the shell 40. As shown in FIG. 2, the internal cooling flow path 60 may be provided at least in part by interconnected flow channels 66 of a plurality of cooling tubes 68, or the internal cooling space 60 may be an open space within the shell 40 that optionally includes baffles 70 or other flow deflectors that dictate the direction of flow through the open space. In one specific embodiment, the enclosed shell 40 may be constructed from a plurality of fluid cooled panels that are connected together such as, for example, the panels described in U.S. Pub. No. 2021/0094863.

The one or more submerged combustion burners 30 are mounted in the housing 38 and are submerged by the glass melt 26. The submerged combustion burners 30 are preferably received through the housing 38 and spaced apart along the floor 44 of the enclose shell 40 of the housing 38, although one or even several of the burners 30 may be received through the housing 38 and distributed along the upstanding wall 46 of the shell 40 at a location immersed by the glass melt 26. Each of the one or more submerged combustion burners 30 introduces the mixture 24 of hydrogen gas and an oxidant gas directly into the glass melt 26. The mixture of hydrogen gas and the oxidant gas does not include a hydrocarbon gas and, additionally, the mixture 24 is preferably fed separately to each of the individual burners 30 and then mixed internally within the burners 30. The hydrogen gas supplied to the submerged combustion burner(s) 30 as part of the mixture may include at least 80 vol% H₂, although the hydrogen gas in preferred implementations includes at least 95 vol% to 100 vol% H₂ with any remainder being commercially acceptable impurities. As for the oxidant gas, it may include at least 30 vol% O2, although the oxidant gas in preferred implementations includes at least 90 vol% O₂ or even at least 99 vol% O2 with any remainder being commercially acceptable impurities. Some examples of a suitable oxidant gas include vacuum swing absorption grade commercial oxygen (minimum O₂ purity of 90-93 vol%) and cryogenic distillation grade commercial oxygen (minimum O₂ purity of 99.5 vol%).

The mixture 24 of hydrogen gas and the oxidant gas autoignites upon exiting its respective burner 30 to discharge combustion products 32 that comprise water vapor into the glass melt 26. Depending on the purities and respective gas flow rates of the hydrogen gas and the oxidant gas, the amount of water vapor included in the combustion products 32 discharged from each of the burners 30 may vary, but typically constitutes at least 50 vol%-or even as much as at least 75 vol% or at least 85 vol%-of the discharged combustion products 32 based on the overall volumetric flow rate of the combustion products 32. For example, the amount of water vapor in the combustion products 32 can be increased by (i) increasing the content of H2 and O2 in the mixture 24 of hydrogen gas and the oxidant gas to help limit the flow of other gases through the burner(s) 30 that do not participate in the combustion reaction and (ii) approaching a stoichiometric gas flow of H₂ and O₂ to reduce the flow of uncombusted H₂/O₂ through the burner(s) 30. The discharged combustion products 32 agitate and heat the glass melt 26 so that the batch feedstock material 22, when introduced into the glass melt 26 in the melter 12, is disbanded, mixed, and melted to form molten glass that assimilates into the glass melt 26. Depending on the weight of the glass melt 26, which in some cases may contain between 50 and 200 metric tons of molten glass, the melter 12 may include anywhere from five to forty submerged combustion burners 30.

The batch feedstock material 22 introduced into the submerged combustion melter 12 includes at least 40 wt% cullet. More preferably, however, the batch feedstock material 22 includes at least 60 wt% cullet or, more narrowly, at least 95 wt% cullet or at least 98 wt% cullet, and may even comprise 100 wt% cullet. The remaining portion of the batch feedstock material 22, if any, may be mineral additions to adjust the color and/or the composition of the glass melt 26. These mineral additions may include one or more of colorants, decolorants, and redox agents. Virgin raw materials such as quartz sand, soda ash, and limestone are preferably omitted from the batch feedstock material 22 to keep CO₂-producing raw materials out of the melter 12. The batch feedstock material 22 may be formulated to produce any of a variety of glasses, including oxide glasses such as, for example, soda-lime-silica glass having a chemical composition that comprises 60-80 wt% SiO₂ (71-74 wt% preferred), 8-18 wt% Na₂O (12-15 wt% preferred), and 5-15 wt% CaO (9-13 wt% preferred), along with optional compounds including 0.5-3 wt%Al₂O₃. To produce soda-lime-silica glass, the cullet included in the batch feedstock material 22 is soda-lime-silica cullet (*i.e.,* pieces of previously formed soda-lime-silica glass). Other types of oxide glasses that may be produced by melting the batch feedstock material 22 besides soda-lime-silica glass include borosilicate glass and an aluminosilicate glass.

The combustion of the hydrogen and oxidant gas mixture 24 and the discharge of the combustion products 32 into and through the glass melt 26 from the submerged combustion burners(s) 30 produces a flue gas within the interior reaction chamber 28. The flue gas includes water vapor and possibly some entrained particulate material including, most notably, batch feedstock material particulates that may be swept up into a head space 74 of the interior reaction chamber 28 above the glass melt 26. The flue gas is exhausted from the melter 12 as a flue gas flow 72. And since the main contributor to the flue gas comprising the flue gas flow 72 is the combustion products 32 discharged from the submerged combustion burner(s) 30, the flue gas flow 72 contains a notable contingent of water vapor-typically at least 40 vol% H₂O_{(*v*)}; although, depending on the purity and respective flow rates of the hydrogen and oxidant gases to the burners 30 and the cullet content of the batch feedstock material 22, the flue gas flow 72 may contain a higher water vapor content, such as at least 60 vol% H₂O_{(*v*)}, at least 70 vol% H₂O_{(*v*)}. at least 80 vol% H₂O_{(*v*)}, at least 90 vol% H₂O_{(*v*)}, or even at least 95 vol% H₂O_{(*v*)}. The flue gas flow 72 is exhausted out of the interior reaction chamber 28 through the exhaust outlet 56 defined in the housing 38 and typically has a temperature of 1150°C or higher or, more specifically, a temperature of 1200°C to 1400°C. Because of the high temperature and substantial water content of the flue gas flow 72, the sensible and/or the latent heat of vaporization of the flue gas flow 72 may be recovered and used within the glass melting system 10. Several options for recovering thermal energy from the flue gas flow 72 are described in more detail below.

The sensible heat of the flue gas flow 72 may be transferred to the batch feedstock material 22 in the batch feedstock material preheater 14. Indeed, after exiting the melter 12, the flue gas flow 72 is delivered to the batch feedstock material preheater 14 as all or part of a preheater gas flow 76. In the embodiment shown here, the flue gas flow 72 is directed from the exhaust outlet 56 and into a melter exhaust line 78, and is then combined with a recycled gas flow 80 returning through a gas recirculation line 82 to provide the preheater gas flow 76 within a preheater gas inlet line 84. In this case, each of the flue gas flow 72 and the recycled gas flow 80 constitutes a portion of the preheater gas flow 76. If, however, the recycled gas flow 80 is not combined with the flue gas flow 72 in the manner shown in FIG. 1, and no other gas is mixed with the flue gas flow 72, the flue gas flow 72 exiting the melter 12 would constitute the entire preheater gas flow 76. While the flue gas flow 72 shown here includes all of the gas exhausted through the exhaust outlet 56 of the melter 12, which may be the case in some embodiments, the flue gas flow 72 does not necessarily have to include the full exhaust flow. For instance, some of the flue gas flow 72 may be diverted from the melter exhaust line 78 through another line (not shown), if desired, in order to use that diverted flue gas elsewhere within or outside of the glass making system 10.

The preheater gas flow 76 is introduced into the batch feedstock material preheater 14 through the preheater gas inlet line 84 at a temperature of 300°C to 1100°C or, more typically, at a temperature of 600°C to 800°C. The temperature of the preheater gas flow 76 depends on the volumetric gas flow ratio of the flue gas flow 72 to any other gas flows including, if applicable, the recycled gas flow 80, as well as the temperature(s) of the gas flow(s). The batch feedstock material preheater 14 may be any device capable of transferring sensible heat from the preheater gas flow 76 to the batch feedstock material 22 to raise a temperature of the batch feedstock material 22 prior to the material 22 being introduced into the melter 12. For example, the batch feedstock material preheater 14 may be a direct contact raining bed counterflow preheater-an example of which is shown and described in each of US 4,875,919 and US 5,125,943-in which the preheater gas flow 76 is delivered into a heating chamber 86 of the preheater 14 through a preheater gas inlet 88 proximate a bottom wall 90 of the preheater 14 and, as a result, flows upwards and through the heating chamber 86. The preheater gas flow 76 eventually exits the preheater 14 through a preheater gas outlet 92 proximate a top wall 94 of the preheater 14 as a condenser gas flow 96. The condenser gas flow 96 then enters a preheater gas outlet line 98 that is connected to the preheater gas outlet 92.

At the same time the preheater gas flow 76 is flowing upwards through the heating chamber 86, the batch feedstock material 22 is introduced into the heating chamber 86 of the preheater 14 through a feed inlet 98 proximate the top wall 94 of the preheater 14 and falls through the heating chamber 86 in direct heat exchange contact with the counterflowing preheater gas flow 76. The preheater 14 may include baffles or other flow deflectors within the heating chamber 86 to deflect the falling batch feedstock material 22 and reroute the upwardly-flowing preheater gas flow 76 to increase the residence time of both the batch feedstock material 22 and the preheater gas flow 76 within the heating chamber 86 to achieve the desired heat exchange. The batch feedstock material 22 exits the batch feedstock material preheater 14 through a feed outlet 100 defined in the bottom wall 90 of the preheater 14 and is heated relative to the temperature of the batch feedstock material 22 entering the preheater 14 through the feed inlet 98. The batch feedstock material 22, for example, may be heated to a temperature of 100°C to 600°C or, more preferably to a temperature of 200°C to 500°C, by the preheater 14 for introduction into the melter 12, and the condenser gas flow 96 leaving the preheater 14 through the preheater gas outlet line 98 may have a reduced temperature of 200°C to 700°C or, more narrowly, of 400°C to 600°C. The batch feedstock material 22 that exits the preheater 14 is carried towards the melter 12 in a charger feed line 102 that is connected to the feed outlet 100.

Once preheated, the batch feedstock material 22 is introduced into the melter 12 through the batch inlet 52 by a feed material charger 104. The feed material charger 104 may be any device that can deliver controlled amounts of the batch feedstock material 22 into the melter 12 for melting. For instance, in one embodiment, the feed material charger 104 includes a hopper 106 that funnels the batch feedstock material 22 delivered from the feed outlet 100 of the batch feedstock material preheater 14 into a feeding tube 108. Housed within the feeding tube 108 is a feeder, such as a rotatable screw or a reciprocating plunger, which is actuatable to controllably meter the batch feedstock material 22 through the feeding tube 108 and into the interior reaction chamber 28 of the melter 12. The batch feedstock material 22 may be introduced into the interior reaction chamber 28 of the melter either above or below the melt level 58 of the glass melt 26. Introducing the batch feedstock material 22 directly into the glass melt 26 below the melt level 58 can help mitigate carryover-i.e., when particles of the batch feedstock material 22 avoid being melted in the glass melt 26 and instead flow directly out of the exhaust outlet 56 as part of the flue gas flow 72-and, thus, possibly lessen or eliminate the need for the particulate separator 16 in the glass melting system 10. One construction of a feed material charger that can feed the batch feedstock material 22 directly into the glass melt 26 is disclosed in U.S. Pub. No. 2020/0156979.

After leaving the batch feedstock material preheater 14, the condenser gas flow 96 may be directed through the particulate separator 16 to recover solid particles that may be entrained in the gas flow 96. Such particulate matter may include batch feed material particulates along with other particulates that may be included in the flue gas flow 72 exiting the melter 12. The particulate separator 16 separates the entrained solid particulate matter from the condenser gas flow 96-recovering over 95 wt% and typically over 99 wt% of all solid particles carried within the condenser gas flow 96-to obtain separated particulates 110. One type of particulate separator that may be used here in the glass making system 10 is a cyclone separator. In a cyclone separator, the condenser gas flow 96 is directed into a separation chamber 112 through a separator gas inlet 114. The separation chamber 112 is constructed to force the condenser gas flow 96 into a spiral vortex, which causes the entrained solid particles to fall downwards through the separation chamber 112 into the separated particulates 110 while the condenser gas flow 96 is pushed upwards and out of the separator 16 through a separator gas outlet 116. Upon exiting the particulate separator 16, the condenser gas flow 96 is drawn into a gas condensation line 118 connected to the separator gas outlet 116. A fan 120 may be disposed within the gas condensation line 118 to help pull the condenser gas flow 96 out of the particulate separator 16 and the batch feedstock material preheater 14 and to further propel the condenser gas flow 96 through the gas condensation line 118.

The separated particulates 110 recovered from the condenser gas flow 96 exit the separation chamber 112 through a particulate outlet 122 and may be delivered back into the submerged combustion melter 12 either directly or, as shown, through the feed material charger 104. In the embodiment shown here in FIG. 1, the separated particulates 110 are returned to the melter 12 through a separator return line 124 that connects the particulate outlet 122 of the separator 16 with a particulate inlet 126 of the melter 12 through which the separated particulates 110 are separately introduced into the hopper 106 of the feed material charger 104. In other design alternatives, the separator return line 124 could be connected to the charger feed line 102, as opposed to being directly connected to the hopper 106, to mix the separated particulates 110 with the batch feedstock material 22 being delivered from the batch feedstock material preheater 14 upstream of the feed material charger 106. Of course, other options exist and are possible for handling the separated particulates 110 received from the particulate separator 16. For example, rather than direct the separated particulates 110 back to the melter 12 through the feed material charger 104, the particulates 110 could be introduced back into the melter 12 through a feeder pot (not shown), disposed of, or returned to a batch feedstock material storage facility.

A portion of the condenser gas flow 96 passing through the gas condensation line 118 may be diverted into the recirculation line 82 that branches off the gas condensation line 118. The diverted portion of the condenser gas flow 96 directed into the recirculation line 82 constitutes the recycled gas flow 80, which, as described above, may be combined with the flue gas flow 72 to form the preheater gas flow 76. The condenser gas flow 96 is delivered to the condenser 18 where the condenser gas flow 96 is brought into heat exchange communication with a coolant and condensed, thus recovering the latent heat of vaporization of the water vapor included in the gas flow 96. The condenser 18 may be a shell and tube heat exchanger, as shown, that includes a casing 128 that defines a shell space 130 and one or more heat exchange tubes 132 that extend through the shell space 130 between an inlet plenum 134 and an outlet plenum 136. The condenser gas flow 96 delivered to the condenser 18 may be directed through interior flow channels of the heat exchange tubes 132 and a cooling fluid 138 may be directed through the shell space 130 as shown in FIG. 1 and described below as a preferred embodiment. The opposite flow configuration is also possible; that is, the condenser gas flow 96 delivered to the condenser 18 may be directed through the shell space 130 while the cooling fluid 138 may be directed through the interior flow channels of the heat exchange tubes 132.

The condenser 18 condenses the water vapor included in the condenser gas flow 96 to produce a water condensate 140 that includes liquid water. For example, when operating the condenser 18 as configured in FIG. 1, the gas condensation line 118 delivers the condenser gas flow 96 to the inlet plenum 134 through a condenser gas inlet 142, which communicates with the interior flow channel(s) defined by the one or more tubes 132. The condenser gas flow 96 flows through the tube(s) 132 while the cooling fluid 138, which may be water or a cooling gas, flows through the shell space 130 between a cooling fluid inlet 144 and a cooling fluid outlet 146. As the condenser gas flow 96 flows through the interior flow channels of the tube(s) 132, the gas loses heat to the cooling fluid 138 and condenses into the water condensate 140, which exits the tube(s) 132 and enters the outlet plenum 136 along with any uncondensed gases (*e.g.,* one or more of N₂, CO₂, Ar, O₂, H₂) that may also be included in the condenser gas flow 96. The uncondensed gases, if any, may be separated from the water condensate 140 and released from the condenser 18 through a gas release valve 148 that is in gas flow communication with the outlet plenum 136.

The water condensate 140 exits the condenser 18 through a condensate outlet 150, which, here, communicates with the outlet plenum 136 of the condenser 18, and the cooling fluid 138 exits the condenser 18 through the fluid cooling outlet 146. The cooling fluid 138 exiting the condenser 18 may be used elsewhere within or outside the glass melting system 10, if needed, as a cooling medium or a heating medium (i. *e.,* hot water). The water condensate 140 is delivered to the cooling water reservoir 20 through a condensate line 152 that connects the condensate outlet 150 with the reservoir 20 to supply a bulk cooling water bath 154 held within the reservoir 20. The cooling water reservoir 20 may be a water basin, a water tower or column, or any other type of vessel that can hold water, and may include a drain valve 156 to help control the volume of the bulk cooling water bath 154. A cooling water delivery line 158 connects a water outlet 160 of the cooling water reservoir 20 with the cooling inlet 62 of the enclosed shell 40 of the housing 38 of the melter 12 so that an inflow of cooling water 162 can be delivered from the cooling water reservoir 20 to the melter 12. A pump 164 may be disposed in the cooling water delivery line 158 to transfer the inflow of cooling water 162 into the melter 12 through the cooling water delivery line 158. And, while not necessarily required, cooling water from an external source may be introduced into the cooling water reservoir 20 to replenish the bulk cooling water bath 154 or to help maintain the bath 154 at a certain volume within the reservoir 20.

When received at the melter 12, the inflow of cooling water 162 is passed through the internal cooling flow path 60 of the shell 40 (FIG. 2) to cool to the housing 38 of the melter 12, which, as described above, results in the formation of the layer of frozen glass 50 over the refractory lining 48, if present, or the shell 40 (if no refractory lining 48 is present) of the housing 38. The cooling water exits the enclosed shell 40 through the cooling outlet 64 as the expended cooling water 36 and may be discarded or used elsewhere within or outside of the glass melting system 10 as a cooling medium or a heating medium. Due to the amount of cooling water available from the cooling water reservoir 20, less water or in some instances no water sourced from an external water supply may be needed to support the operation of the melter 12. The reduced reliance on externally provided water to operate the melter 12 can improve the economics of the glass melting system 10 by decreasing infrastructure and utility costs related to cooling of the melter 12. And because the submerged combustion melter 12 can be operated such that the flue gas flow 72 exhausted from the melter 12 includes, at the very least, a large proportion of water vapor, there is an opportunity to reduce the amount CO₂, NO_{X}, and SO_{X} contained in the flue gas flow 72, possibly even to the point where the flue gas flow 72 does not include any CO₂, NO_{X}, or SO_{X} (*i.e.,* the gas constituent is measurable at no more than a commercially negligible amount). As such, the glass melting system 10 may require less gas abatement equipment, especially since the flue gas flow 72 is eventually condensed to produce cooling water within the system 10.

As described above, the glass-melting system 10 is configured so that the flue gas exhausted from the submerged combustion melter 12 through the exhaust outlet 56 can be used to preheat incoming batch feedstock material 22 and, additionally, the water included in the flue gas can be returned to the melter 12 to cool the melter 12. Indeed, after being exhausted form the melter 12, the flue gas is contained in the flue gas flow 72 and then continues to the batch feedstock material preheater 14 as all or part of the preheater gas flow 76. The flue gas traverses the batch feedstock material preheater 14 and then exits the preheater 14 as all or part of the condenser gas flow 96. Next, as all or part of the condenser gas flow 96, the flue gas passes through the particulate separator 16 and is delivered to the condenser 18 after a portion of the condenser gas flow 96 is optionally diverted as the recycled gas flow 80. Once at the condenser 18, the water included in the flue gas undergoes a phase change and is condensed from water vapor to liquid water. The liquid water condensed from the condenser gas flow 96 is discharged from the condenser 18 as the water condensate 140 and is eventually supplied back to the submerged combustion melter 12 as cooling water. More specifically, the liquid water is supplied to the internal cooling flow path 60 defined within the enclosed shell 40 of the housing 38 of the melter 12. The liquid water returned to the melter 12 may be all or part of the inflow of cooling water 162 supplied from the bulk cooling water bath 154 maintained within the cooling water reservoir 20, which collects the water condensate 140 that exits the condenser 20. As can be seen, within the glass-melting system 10, water_{(*v*)} that is exhausted from the exhaust outlet of the melter 12 can be returned to the internal cooling flow path 60 defined in the enclosed shell 40 of the melter housing 38 as cooling water_{(*l*)} after being used to preheat the batch feedstock material 22.
It is disclosed, in accordance with an aspect of the disclosure, a method of making glass, the method comprising:
discharging combustion products (32) from each of one or more submerged combustion burners (30) directly into a glass melt (26) contained within a submerged combustion melter (12), the combustion products resulting from the combustion of hydrogen gas and an oxidant gas;
exhausting a flue gas flow (72) from the submerged combustion melter;
delivering a preheater gas flow (76) to a batch feedstock material preheater (14) to heat batch feedstock material (22), wherein the preheater gas flow comprises at least the flue gas flow exhausted from the melter, and wherein the batch feedstock material comprises cullet;
introducing the batch feedstock material into the submerged combustion melter after being heated in the batch feedstock material preheater;
removing a condenser gas flow (96) from the batch feedstock material preheater, the condenser gas flow having a temperature lower than a temperature of the preheater gas flow delivered to the batch feedstock material preheater;
condensing the condenser gas flow to form a water condensate (140); and
cooling the submerged combustion melter with an inflow of cooling water (162) that includes the water condensate obtained from condensing the condenser gas flow.
It is further disclosed, in accordance with an aspect of the disclosure, the method as described above, further comprising:
introducing the condenser gas flow into a particulate separator (16) after exiting the batch feedstock material preheater and before being condensed to remove entrained solid particulates from the condenser gas flow.
It is further disclosed, in accordance with an aspect of the disclosure, the method as described above, further comprising:
delivering the water condensate to a cooling water reservoir (20); and
wherein cooling the submerged combustion melter with the inflow of cooling water that includes the water condensate comprises supplying the inflow of cooling water from the cooling water reservoir to the submerged combustion melter.
It is further disclosed, in accordance with an aspect of the disclosure, the method as described above, wherein the submerged combustion melter includes an enclosed shell (40), a refractory lining (48) supported on an inside of the enclosed shell, and a layer of frozen glass (50) supported on the inside of the refractory lining and in contact with the glass melt, and wherein cooling the submerged combustion melter with the inflow of cooling water comprises passing the inflow of cooling water through an internal cooling flow path (60) defined within the enclosed shell.
It is further disclosed, in accordance with an aspect of the disclosure, the method as described above, wherein the batch feedstock material comprises at least 95 wt% cullet.
It is further disclosed, in accordance with an aspect of the disclosure, the method as described above, further comprising:
diverting a portion of the condenser gas flow to form a recycled gas flow (80) and combining the recycled gas flow with the flue gas flow to provide the preheater gas flow.
It is further disclosed, in accordance with an aspect of the disclosure, the method as described above, wherein condensing the condenser gas flow comprises delivering the condenser gas flow to a shell and tube heat exchanger and, further, passing a cooling fluid (138) through the shell and tube heat exchanger to remove heat from and condense water vapor included in the condenser gas flow to produce the water condensate.
This application is a divisional application of European Patent Application EP 23 758 499.0 (WO 2024/036067 A1) which is incorporated by reference herewith in its version as originally filed. Applicant reserves the right to go back to and claim any subject matter which is disclosed in European Patent Application EP 23 758 499.0 (WO 2024/036067 A1) within this divisional application or by way of one or more potential further divisional applications, irrespective of the scope of the attached set of claims.

There thus has been disclosed a glass-melting system and a method of melting glass in a submerged combustion melter. The disclosure has been presented in conjunction with several illustrative embodiments, and additional modifications and variations have been discussed. Other modifications and variations readily will suggest themselves to persons of ordinary skill in the art in view of the foregoing discussion. For example, the subject matter of each of the embodiments is hereby incorporated by reference into each of the other embodiments, for expedience. The disclosure is intended to embrace all such modifications and variations as fall within the scope of the appended claims.

## Claims

1. A method of making glass, the method comprising:
(a) discharging combustion products (32) directly into a glass melt (26) contained within a submerged combustion melter (12), the combustion products agitating the glass melt and resulting from the combustion of a mixture (24) of hydrogen gas and an oxidant gas;
(b) exhausting a flue gas that comprises water vapor from the submerged combustion melter;
(c) heating a batch feedstock material (22) with the flue gas, the batch feedstock material comprising at least 40 wt% cullet;
(d) introducing the batch feedstock material into the glass melt contained within the submerged combustion melter;
(e) condensing the flue gas after the flue gas is used to heat the batch feedstock material in step (c) to form a water condensate (140) that includes liquid water; and
(f) supplying the liquid water to the submerged combustion melter to cool the melter.

2. The method set forth in claim 1, further comprising:
delivering the water condensate to a cooling water reservoir (20); and
wherein supplying the liquid water to the submerged combustion melter comprises supplying an inflow of cooling water (162) from the cooling water reservoir to the submerged combustion melter.

3. The method set forth in claim 2, wherein the submerged combustion melter includes an enclosed shell (40), a refractory lining (48) supported on an inside of the enclosed shell, and a layer of frozen glass (50) supported on the inside of the refractory lining and in contact with the glass melt, and wherein supplying the inflow of cooling water to the submerged combustion melter comprises passing the inflow of cooling water through an internal cooling flow path (60) defined within the enclosed shell.

4. The method set forth in any of claims 1 to 3, further comprising:
separating entrained solid particles from the flue gas after heating the batch feedstock material with the flue gas in step (c) and before condensing the flue gas in step (d).

5. The method set forth in any of claims 1 to 4, wherein a temperature of the flue gas is above 1150°C upon exiting the submerged combustion melter in step (b), and wherein the temperature of the flue gas is reduced to between 200°C to 700°C after heating the batch feedstock material in step (c).

6. The method set forth in any of claims 1 to 5, wherein the mixture of hydrogen gas and an oxidant gas does not include a hydrocarbon gas.

7. A glass-melting system (10) for carrying out the method set forth in any of claims 1 to 6 comprising:
a submerged combustion melter (12) comprising a housing (38) that includes an enclosed shell (40), which interiorly defines an internal cooling flow path (60), and further comprising at least one submerged combustion burner (30) configured to introduce a mixture (24) of hydrogen gas and an oxidant gas directly into the melter, and wherein each of a batch inlet (52) and an exhaust outlet (56) for exhausting a flue gas that comprises water vapor from the submerged combustion melter is defined through the housing of the submerged combustion melter;
means for heating a batch feedstock material (22) with the flue gas, the batch feedstock material comprising at least 40 wt% cullet;
means for introducing the batch feedstock material into the glass melt contained within the submerged combustion melter;
means for condensing the flue gas after the flue gas is used to heat the batch feedstock material in step (c) to form a water condensate (140) that includes liquid water; and
means for supplying the liquid water to the submerged combustion melter to cool the submerged combustion melter.

8. The glass-melting system set forth in claim 7, comprising:
a feed material charger (104) configured to introduce the batch feedstock material into the batch inlet of the submerged combustion melter after the batch feedstock material is heated in a batch feedstock material preheater.

9. The glass-melting system set forth in claim 8, further comprising:
a particulate separator (16) in fluid communication with the batch feedstock material preheater and a condenser, the particulate separator being configured to remove entrained solid particles from the flue gas after the flue gas exits the batch feedstock material preheater but before the condenser gas flow is received at the condenser.

10. The glass-melting system set forth in claim 9, wherein the particulate separator is a cyclone separator.

11. The glass-melting system set forth in claim 9, wherein the condenser is a shell and tube heat exchanger.

12. The glass-melting system set forth in any of claims 8 to 11, wherein the batch feedstock material preheater is a direct contact raining bed counterflow preheater.

13. The glass-melting system set forth in any of claims 7 to 12, wherein the housing of the submerged combustion melter further includes a refractory lining (48) supported on an inside of the enclosed shell and a layer of frozen glass (50) supported on the inside of the refractory lining.

## Patentansprüche

1. Verfahren zur Herstellung von Glas, wobei das Verfahren umfasst:
(a) Entlassen von Verbrennungsprodukten (32) direkt in eine Glasschmelze (26), die in einem Tauchverbrennungsschmelzofen (12) aufgenommen ist, wobei die Verbrennungsprodukte die Glasschmelze in Wallung versetzen und aus der Verbrennung eines Gemischs (24) aus Wasserstoffgas und einem Oxidationsmittelgas resultieren,
(b) Abführen eines Wasserdampf umfassenden Rauchgases aus dem Tauchverbrennungsschmelzofen,
(c) Erwärmen eines Gemenge-Ausgangsmaterials (22) mit dem Rauchgas, wobei das Gemenge-Ausgangsmaterial mindestens 40 % Bruchglas umfasst,
(d) Einbringen des Gemenge-Ausgangsmaterials in die im Tauchverbrennungsschmelzofen enthaltene Glasschmelze,
(e) Kondensieren lassen des Rauchgases, nachdem das Rauchgas verwendet wurde, um in Schritt (c) das Gemenge-Ausgangsmaterial zu erwärmen, um ein Wasserkondensat (140) zu bilden, das flüssiges Wasser enthält, und
(f) Zuführen des flüssigen Wassers zu dem Tauchverbrennungsschmelzofen zum Kühlen des Schmelzofens.

2. Verfahren nach Anspruch 1, ferner umfassend:
Abgeben des Wasserkondensats an einen Kühlwasservorratsbehälter (20), und
wobei das Zuführen des flüssigen Wassers zu dem Tauchverbrennungsschmelzofen das Zuführen eines Zuflusses von Kühlwasser (162) aus dem Kühlwasservorratsbehälter zu dem Tauchverbrennungsschmelzofen umfasst.

3. Verfahren nach Anspruch 2, wobei der Tauchverbrennungsschmelzofen einen geschlossenen Mantel (40) umfasst, eine feuerfeste Auskleidung (48), die an einer Innenseite des geschlossenen Mantels angebracht ist, sowie eine Schicht aus verfestigtem Glas (50), die an der Innenseite der feuerfesten Auskleidung gehalten ist und mit der Glasschmelze in Kontakt steht, und wobei das Zuführen des Zuflusses von Kühlwasser zu dem Tauchverbrennungsschmelzofen das Durchleiten des Zuflusses von Kühlwassers durch einen in dem geschlossenen Mantel ausgebildeten internen Kühlströmungsweg (60) umfasst.

4. Verfahren nach einem der Ansprüche 1 bis 3, ferner umfassend:
Abtrennen von mitgerissenen Feststoffpartikeln aus dem Rauchgas nach dem Erwärmen des Gemenge-Ausgangsmaterials mit dem Rauchgas in Schritt (c) und vor dem Kondensieren lassen des Rauchgases in Schritt (d).

5. Verfahren nach einem der Ansprüche 1 bis 4, wobei eine Temperatur des Rauchgases beim Austritt aus dem Tauchverbrennungsschmelzofen in Schritt (b) mehr als 1150 °C beträgt, und wobei die Temperatur des Rauchgases nach dem Erwärmen des Gemenge-Ausgangsmaterials in Schritt (c) auf 200 °C bis 700 °C gesenkt ist.

6. Verfahren nach einem der Ansprüche 1 bis 5, wobei das Gemisch aus Wasserstoffgas und einem Oxidationsmittelgas kein Kohlenwasserstoffgas enthält.

7. Glasschmelzsystem (10) zum Ausführen des Verfahrens nach einem der Ansprüche 1 bis 6, umfassend:
einen Tauchverbrennungsschmelzofen (12) mit einem Gehäuse (38), das einen geschlossenen Mantel (40) umfasst, in dessen Innerem ein interner Kühlströmungsweg (60) ausgebildet ist, und ferner mit mindestens einem Tauchverbrennungsbrenner (30), der dazu ausgebildet ist, ein Gemisch (24) aus Wasserstoffgas und einem Oxidationsmittelgas direkt in den Schmelzofen einzubringen, und wobei durch das Gehäuse des Tauchverbrennungsschmelzofens sowohl ein Gemengeeinlass (52) als auch ein Abgasauslass (56) zum Abführen eines Wasserdampf umfassenden Rauchgases aus dem Tauchverbrennungsschmelzofen definiert sind,
Mittel zum Erwärmen eines Gemenge-Ausgangsmaterials (22) mit dem Rauchgas, wobei das Gemenge-Ausgangsmaterial mindestens 40 % Bruchglas umfasst,
Mittel zum Einbringen des Gemenge-Ausgangsmaterials in die im Tauchverbrennungsschmelzofen enthaltene Glasschmelze,
Mittel zum Kondensieren lassen des Rauchgases, nachdem das Rauchgas verwendet wurde, um in Schritt (c) das Gemenge-Ausgangsmaterial zu erwärmen, um ein Wasserkondensat (140) zu bilden, das flüssiges Wasser enthält, und
Mittel zum Zuführen des flüssigen Wassers zu dem Tauchverbrennungsschmelzofen zum Kühlen des Tauchverbrennungsschmelzofens.

8. Glasschmelzsystem nach Anspruch 7, umfassend:
einen Einspeiser für Ausgangsmaterial (104), der dazu ausgebildet ist, das Gemenge-Ausgangsmaterial in den Gemengeeinlass des Tauchverbrennungsschmelzofens einzuspeisen, nachdem das Gemenge-Ausgangsmaterial in einem Vorwärmer für Gemenge-Ausgangsmaterial erwärmt worden ist.

9. Glasschmelzsystem nach Anspruch 8, ferner umfassend:
einen Partikelabscheider (16), der in Fluidverbindung mit dem Vorwärmer für Gemenge-Ausgangsmaterial und einem Kondensator steht, wobei der Partikelabscheider dazu ausgebildet ist, mitgerissene Feststoffpartikel aus dem Rauchgas zu entfernen, nachdem das Rauchgas den Vorwärmer für Gemenge-Ausgangsmaterial verlassen hat, aber bevor der Kondensationsgasstrom an dem Kondensator empfangen wird.

10. Glasschmelzsystem nach Anspruch 9, wobei der Partikelabscheider ein Zyklonabscheider ist.

11. Glasschmelzsystem nach Anspruch 9, wobei der Kondensator ein Rohrbündelwärmetauscher ist.

12. Glasschmelzsystem nach einem der Ansprüche 8 bis 11, wobei der Vorwärmer für Gemenge-Ausgangsmaterial ein Direktkontakt-Regenbett-Gegenstrom-Vorwärmer ist.

13. Glasschmelzsystem nach einem der Ansprüche 7 bis 12, wobei das Gehäuse des Tauchverbrennungsschmelzofens ferner eine feuerfeste Auskleidung (48) aufweist, die an einer Innenseite des geschlossenen Mantels angebracht ist, sowie eine Schicht aus verfestigtem Glas (50), die an der Innenseite der feuerfesten Auskleidung gehalten ist.

## Revendications

1. Procédé de fabrication de verre, le procédé comprenant:
(a) le déchargement de produits de combustion (32) directement dans une fusion de verre (26) contenue dans un four de fusion à combustion immergée (12), les produits de combustion agitant la fusion de verre et résultant de la combustion d'un mélange (24) de gaz hydrogène et d'un gaz oxydant,
(b) l'évacuation d'un gaz de fumée comprenant de la vapeur d'eau hors du four de fusion à combustion immergée,
(c) le chauffage d'une matière première de charge (22) avec le gaz de fumée, la matière première de charge comprenant au moins 40 % du calcin,
(d) l'introduction de la matière première de charge dans la fusion de verre contenue dans le four de fusion à combustion immergée,
(e) la condensation du gaz de fumée après que le gaz de fumée a été utilisé pour chauffer la matière première de charge dans l'étape (c), afin de former un condensat d'eau (140) comprenant de l'eau liquide, et
(f) la fourniture de l'eau liquide vers le four de fusion à combustion immergée afin de refroidir le four de fusion.

2. Procédé selon la revendication 1, comprenant en outre:
la fourniture du condensat d'eau à un réservoir d'eau de refroidissement (20), et
dans lequel la fourniture de l'eau liquide vers le four de fusion à combustion immergée comprend la fourniture d'un afflux d'eau de refroidissement (162) du réservoir d'eau de refroidissement au four de fusion à combustion immergée.

3. Procédé selon la revendication 2, dans lequel le four de fusion à combustion immergée comprend une enveloppe fermée (40), un revêtement réfractaire (48) supporté sur un intérieur de l'enveloppe fermée, et une couche de verre solidifié (50) supportée sur l'intérieur du revêtement réfractaire et en contact avec la fusion de verre, et dans lequel la fourniture d'un afflux d'eau de refroidissement vers le four de fusion à combustion immergée comprend le passage de l'afflux d'eau de refroidissement à travers un chemin d'écoulement de refroidissement interne (60) défini dans l'enveloppe fermée.

4. Procédé selon l'une quelconque des revendications 1 à 3, comprenant en outre:
la séparation des particules solides entraînées du gaz de fumée après le chauffage de la matière première de charge avec le gaz de fumée à l'étape (c) et avant la condensation du gaz de fumée à l'étape (d).

5. Procédé selon l'une quelconque des revendications 1 à 4, dans lequel une température du gaz de fumée est supérieure à 1150 °C lors de la sortie du four de fusion à combustion immergée à l'étape (b), et dans lequel la température du gaz de fumée est réduite à une plage comprise entre 200 °C et 700 °C après le chauffage de la matière première de charge à l'étape (c).

6. Procédé selon l'une quelconque des revendications 1 à 5, dans lequel le mélange de gaz hydrogène et d'un gaz oxydant n'inclut pas de gaz hydrocarbure.

7. Système de fusion de verre (10) pour la mise en œuvre du procédé selon l'une quelconque des revendications 1 à 6, comprenant:
un four de fusion à combustion immergée (12) comprenant un boîtier (38) comprenant une enveloppe fermée (40) laquelle définit intérieurement un chemin d'écoulement de refroidissement interne (60), et comprenant en outre au moins un brûleur à combustion immergée (30) configuré pour introduire un mélange (24) de gaz hydrogène et d'un gaz oxydant directement dans le four de fusion, et dans lequel une entrée de charge (52) ainsi qu'une sortie d'échappement (56) destinée à évacuer du four de fusion à combustion immergée un gaz de fumée comprenant de la vapeur d'eau sont définies par le boîtier du four de fusion à combustion immergée,
des moyens pour chauffer une matière première de charge (22) avec le gaz de fumée, la matière première de charge comprenant au moins 40 % du calcin,
des moyens pour introduire la matière première de charge dans la fusion de verre contenue dans le four de fusion à combustion immergée,
des moyens pour condenser le gaz de fumée après que le gaz de fumée a été utilisé pour chauffer la matière première de charge dans l'étape (c), afin de former un condensat d'eau (140) comprenant de l'eau liquide, et
des moyens pour fournir l'eau liquide vers le four de fusion à combustion immergée afin de refroidir le four de fusion à combustion immergée.

8. Système de fusion de verre selon la revendication 7, comprenant:
un chargeur de matière première (104) configuré pour introduire la matière première de charge dans l'entrée de charge du four de fusion à combustion immergée après que la matière première de charge a été chauffée dans un préchauffeur de matières premières de charge.

9. Système de fusion de verre selon la revendication 8, comprenant en outre:
un séparateur de particules (16) en communication fluidique avec le préchauffeur de matières premières de charge et avec un condenseur, le séparateur de particules étant configuré pour éliminer des particules solides entraînées du gaz de fumée après que le gaz de fumée a quitté le préchauffeur de matières premières de charge, mais avant que le flux de gaz de condensation n'est reçu au condenseur.

10. Système de fusion de verre selon la revendication 9, dans lequel le séparateur de particules est un séparateur à cyclone.

11. Système de fusion de verre selon la revendication 9, dans lequel le condenseur est un échangeur de chaleur à faisceau tubulaire.

12. Système de fusion de verre selon l'une quelconque des revendications 8 à 11, dans lequel le préchauffeur de matières premières de charge est un préchauffeur à lit ruisselant à contact direct en contre-courant.

13. Système de fusion de verre selon l'une quelconque des revendications 7 à 12, dans lequel le boîtier du four de fusion à combustion immergée comprend en outre un revêtement réfractaire (48) supporté sur un intérieur de l'enveloppe fermée, ainsi qu'une couche de verre solidifié (50) supportée sur l'intérieur du revêtement réfractaire.
